Europäisches Patentamt

European Patent Office

Office européen des brevets

(19)

(11) Veröffentlichungsnummer : **0 071 803**
**B1**

(12)

# EUROPÄISCHE PATENTSCHRIFT

(45) Veröffentlichungstag der Patentschrift :
24.04.85

(51) Int. Cl.⁴ : **B 60 R 25/02**

(21) Anmeldenummer : **82106414.4**

(22) Anmeldetag : **16.07.82**

(54) Lenkschloss für ein Kraftfahrzeug.

Verbunden mit 82902173.2/0085061 (europäische Anmeldenummer/Veröffentlichungsnummer) durch Entscheidung vom 12.09.84.

(30) Priorität : **08.08.81 DE 3131558**

(43) Veröffentlichungstag der Anmeldung :
**16.02.83 Patentblatt 83/07**

(45) Bekanntmachung des Hinweises auf die Patenterteilung : **24.04.85 Patentblatt 85/17**

(84) Benannte Vertragsstaaten :
**DE FR GB IT SE**

(56) Entgegenhaltungen :
**DE-A- 2 829 192**
**FR-A- 1 583 726**

(73) Patentinhaber : **NEIMAN S.A.**
**39, Avenue Marceau**
**F-92400 Courbevoie (FR)**

(72) Erfinder : **Weber, Günter**
**Bergerheide 54**
**D-5600 Wuppertal 1 (DE)**

(74) Vertreter : **Patentanwaltsbüro Cohausz & Florack**
**Postfach 14 01 47**
**D-4000 Düsseldorf 1 (DE)**

EP 0 071 803 B1

**Beschreibung**

Die Erfindung betrifft ein Zylinderschloß, insbesondere Lenkschloß für ein Kraftfahrzeug, mit einem durch einen Schließzylinder betätigbaren Sperriegel, der in seiner sperrenden Lage durch ein federbelastetes Sperrstück sperrbar ist, wobei das Sperrstück in seiner entsperrten Lage gegen den Druck der Feder durch ein Teil gehalten wird, das bei unbefugter Entfernung des Schließzylinders aus dem Schloßgehäuse das Sperrstück in die sperrende Lage freigibt.

Ein derartiges Schloß ist aus der DE-B 2 644 312 bekannt. Bei diesem bekannten Lenkschloß wird das bolzenförmige Sperrstück durch einen zweiarmigen Hebel zurückgehalten, der seitlich des Sperriegels am Schloßgehäuse angelenkt ist. Um diesen Hebel aufnehmen zu können, ist das Schloßgehäuse im Bereich des Sperriegels erheblich größer ausgeführt, so daß das Lenkschloß größer baut. Da der Hebel nicht beliebig lang ausgeführt sein kann, um noch effektiv arbeiten zu können, kann das Sperrstück nicht beliebig weit vom Schließzylinder bzw. von der am Zylinderkern befestigten Schaltwalze angeordnet werden. Hierdurch ist das Sperrstück leichter von außen erreichbar. Ferner sind Herstellung und Montage eines Hebels verhältnismäßig aufwendig.

Aufgabe der Erfindung ist es, ein Zylinderschloß der eingangs genannten Art derart zu verbessern; daß bei kleinen äußeren Abmessungen des Schloßgehäuses das Sperrstück für Unbefugte von außen schwer erreichbar ist und vom Schließzylinder beliebig weit entfernt in dem den Sperriegel aufnehmenden Schloßgehäuseteil angeordnet sein kann.

Diese Aufgabe wird erfindungsgemäß dadurch gelöst, daß das Teil ein zum Sperriegel parallel angeordneter und längsbeweglicher Draht ist, dessen äußeres Ende in den Weg des Sperrstücks hineinragt und dessen inneres Ende zumindest in der Schlüsselabzugsstellung mit dem Schließzylinder derart verbunden ist, daß eine Bewegung des Schließzylinders aus dem Schloßgehäuse heraus zu einer Bewegung des Drahtes in die das Sperrstück freigebende Stellung führt.

Unter einem Draht wird auch ein Stift, eine Nadel oder ein ähnlicher Gegenstand verstanden, der in Längsrichtung parallel zum Sperriegel beweglich ist. Bei einem Entfernen des Schließzylinders oder bei Zerstörung des Schlosses, insbesondere bei einem Abbrechen des Schlosses vom Hals der Sperriegelaufnahme wird immer der Draht vom Sperrstück zurückgezogen und dadurch das Sperrstück freigegeben, so daß es in die Ausnehmung des Sperrbolzens gelangt. Da ein solcher Draht beliebig lang sein kann, ohne seine Funktionsfähigkeit einzubüßen, kann auch das Sperrstück vom Schließzylinder beliebig weit entfernt an einer unzugänglichen Stelle angeordnet werden. Damit können auch das den Sperriegel aufnehmende Schloßteil als auch der Sperriegel beliebig lang sein, so daß nicht nur eine Manipulation erschwert wird, sondern auch Schloßkonstruktionen ermöglicht werden, bei denen der Schließzylinder weit von der Lenksäule entfernt ist. Der Draht kann verhältnismäßig dünn ausgeführt sein, da er nur in Längsrichtung gezogen wird. Der Draht erhöht somit nicht die Breite des den Sperriegel aufnehmenden Schloßaufnahmeteils (Hals) und kann dicht beim Sperriegel liegen, so daß die Gehäusewand in ihrer Dicke nicht verringert werden muß und damit einen optimalen Schutz bietet. Eine Manipulation des Drahtes in Form eines Ausbiegens führt immer zu einer Verkürzung des Drahtes und damit zur Freigabe des Sperrstückes.

Eine einfache Ausführung des Drahtes parallel zum Sperriegel als auch eine leichte Montage und eine sehr unzugängliche Anordnung werden dann erreicht, wenn der Draht mit dem Zylinderkern oder der am Zylinderkern befestigten Schaltwalze verbunden ist.

In einem bevorzugten Ausführungsbeispiel kann der Draht über mindestens ein Zwischenteil mit dem Schließzylinder oder der Schaltwalze verbunden sein. Bei einer solchen Ausführung kann das Zwischenteil die Bewegung einer Schließzylinderherausnahme auf den Draht übertragen und sich vom Schließzylinder so weit weg erstrecken, daß der Draht gerade ausgeführt sein kann und damit sehr einfach in der Herstellung ist.

Der Draht liegt besonders geschützt dann, wenn der Draht innerhalb des Schloßgehäuseteils einliegt, das den Sperriegel aufnimmt. Statt eines Zwischenteils kann auch der Draht nahe des Schließzylinders zur Schlüsseleinführungsseite hin umgebogen sein und in die den Schließzylinder aufnehmende Bohrung des Schloßgehäuses hineinragen und innerhalb der Bohrung am Schließzylinder befestigt sein. Hierdurch erübrigt sich die Anordnung eines Zwischenteils.

Eine sichere und nur geringe Reibung erzeugende Übertragung der Schließzylinderbewegung auf das äußere Drahtende wird dadurch geschaffen, daß mindestens ein Teil des gebogenen Bereichs des Drahtes während des Zugs durch den Schließzylinder an der Schloßgehäuseinnenwandung anliegt. Hierzu wird auch vorgeschlagen, daß innerhalb des Schloßgehäuseteils, das den Sperriegel aufnimmt, zumindest nahe des gebogenen Bereichs der Draht einen Abstand zur Gehäusewandung hat.

Vorzugsweise wird vorgeschlagen, daß das Zwischenteil eine zur Zylinderachse und Sperriegellängsachse schräge Fläche aufweist, an der das innere Drahtende anliegt. Hierdurch wird durch das Zwischenteil eine Bewegung des Drahtes erzeugt, die rechtwinklig zur Bewegung des Schließzylinders ist. Eine besonders einfache, sichere und leicht montierbare Ausführung wird dadurch erreicht, daß das innere Drahtende eine Öse bildet, in der ein schräg zur Zylinderachse und zur Sperriegellängsachse angeordneter Bolzen hineinragt. Vorzugsweise wird vorgeschlagen, daß das innere Drahtende oder das Zwischenteil in eine äußere Ringnut am Schließzylinder oder an der Schaltwalze hineinragt. Hierdurch wird ein sicherer Halt für das innere Drahtende und das Zwischenteil am Schließzylinder oder an der Schaltwalze erreicht, wobei sich der Schließzylinder gegenüber dem Zwischenteil bzw. dem inneren Drahtende drehen kann. Um ein Einsetzen während der Montage bzw. ein späteres Abziehen des Schließzylinders zu ermöglichen, wird vorgeschlagen, daß die Ringnut zum Sperriegel hin an einer Stelle unterbrochen ist, an der das innere Drahtende oder das Zwischenteil in einer nur bei eingestecktem Schlüssel erreichbaren Stellung einliegt.

Zwei Ausführungsbeispiele der Erfindung sind in den Zeichnungen dargestellt und werden im folgenden näher beschrieben. Es zeigen :

Figur 1 einen Schnitt durch das Schloß in einem ersten Ausführungsbeispiel mit einem Zwischenteil in Höhe der Achsen des Schließzylinders und des Sperriegels, wobei der Draht das Sperrstück sperrt ;

Figur 2 einen Schnitt nach A-A in Fig. 1 ;

Figur 3 einen Schnitt nach Fig. 1 nach einem Entfernen des Schließzylinders und damit einem Einfallen des Sperrstücks in den Sperriegel ;

Figur 4 einen Schnitt nach B-B in Fig. 3 ;

Figur 5 eine vergrößerte Darstellung des inneren Drahtendes ;

Figuren 6 bis 10 Schnitte entsprechend Fig. 1 bis 5 mit einem umgebogenen inneren Drahtende, so daß das Zwischenteil entfällt.

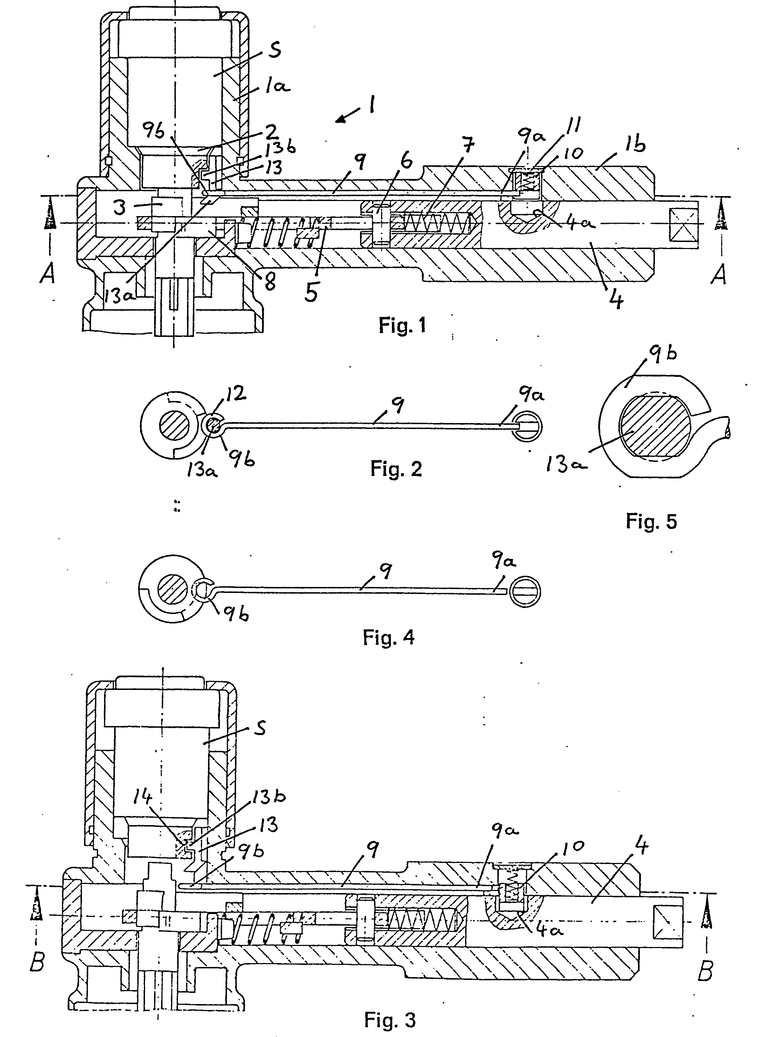

In dem in den Figuren 1 bis 5 gezeigten ersten Ausführungsbeispiel weist das Schloßaufnahmegehäuse 1 einen ersten Teil 1a auf, in dem der Schließzylinder unbeweglich befestigt ist. Im Schließzylinder ist der Zylinderkern 2 drehbar gelagert, dessen von der Schlüsseleinführungsseite abweisendes Ende eine Schaltwalze 3 trägt, deren freies Ende in einen nicht gezeigten Drehschalter hineinreicht. Rechtwinklig zur Schließzylinderachse und zur Schaltwalzenachse ist in Höhe der Schaltwalze ein Sperriegel 4 längsbeweglich angeordnet, der in einem Schloßgehäuseteil 1b liegt und das auch als Schloßhals bezeichnet wird. Der Sperriegel 4 wird über ein Übertragungsteil 5 bewegt, das am inneren Ende des Sperriegels 4 längs zu seiner Achse angeordnet ist und am Sperriegel durch einen Bolzen 6 befestigt ist, der in einem Langloch des Teils 5 einliegt, um eine begrenzte Bewegung zwischen dem Sperriegel und dem Teil 5 zuzulassen. Dabei drückt eine Feder 7 den Sperriegel vom Teil 5 weg, so daß der Sperriegel 4 in der Sperrstellung so lange auf dem Lenksäulenmantel aufliegen kann, bis die Lenksäulenausnehmung durch Drehen des Lenkrades erreicht ist und in diese einfällt. Eine Bewegung des Sperriegels 4 durch die Schaltwalze 3 erfolgt durch eine Kurvenbahn 8 der Schaltwalze 3, die das Teil 5 betätigt.

Im Schloßgehäuseteil 1b liegt parallel zum Sperriegel 4 in dem der Schlüsseleinführung zugewandten Bereich ein Draht 9 längsbeweglich ein, dessen äußeres Ende 9a ein Sperrstück 10 gegen den Druck einer Feder 11 zurückhält. Das Sperrstück 10 ist rechtwinklig zum Sperriegel 4 und parallel zum Schließzylinder beweglich und fällt nach dem Zurückziehen des Drahtes 9 in eine Vertiefung 4a ein, die im Sperriegel 4 an einer Stelle vorgesehen ist, an der der Sperriegel 4 in seiner sperrenden, in die Lenksäule eingerasteten Lage sich befindet. Das bolzenförmige Sperrstück 10 liegt vom Schließzylinder weit entfernt nahe der nicht dargestellten Lenksäule.

Das innere Drahtende 9b ist zu einer Öse 12 umgebogen und umfaßt ein schräg zylindrisches Teil 13a eines Zwischenteils 13, das parallel zur Schaltwalze 3 und zum Schließzylinder neben der Schaltwalze angeordnet ist und mit einem Nocken 13b in einer Nut 14 der Schaltwalze 3 einliegt. Die außen an der Schaltwalze 3 angeordnete Ringnut 14 ist an einer Stelle zum Schalter hin unterbrochen, so daß in einer bestimmten Drehstellung (unterschiedlich von der Schlüsselabzugsstellung) der Schließzylinder montiert als auch abgezogen werden kann.

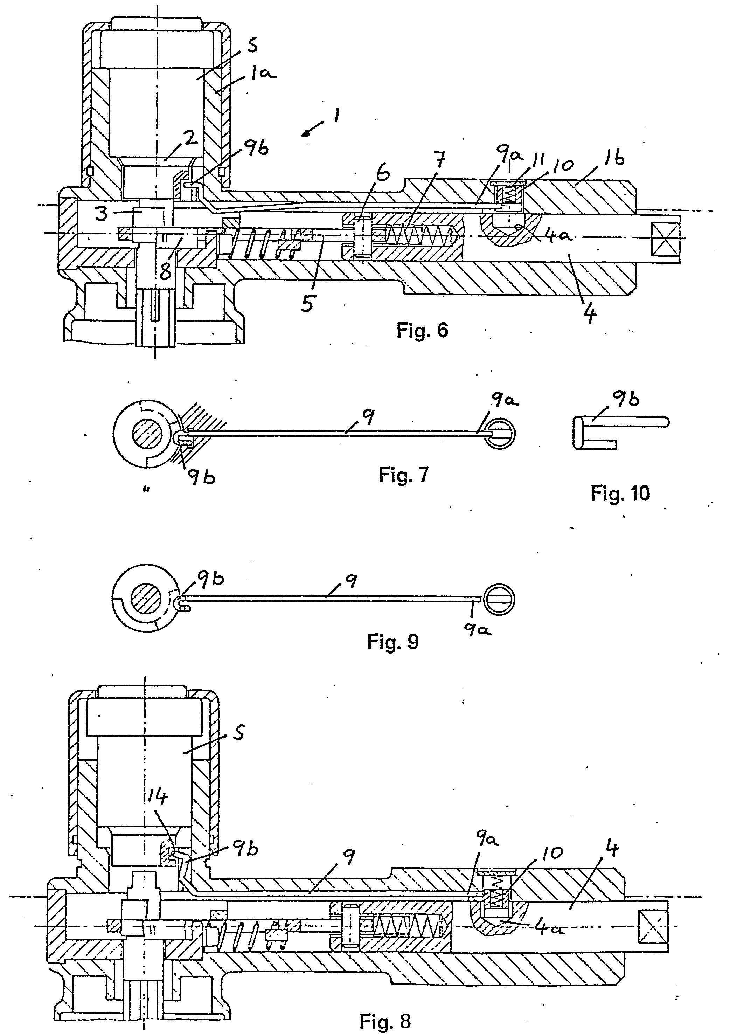

Bei dem in den Figuren 5 bis 10 gezeigten Ausführungsbeispiel ist statt des Zwischenteils 13 der Draht nahe des Schließzylinders zur Schlüsseleinführungsseite hin umgebogen, so daß er in die den Schließzylinder aufnehmende Bohrung des Schloßgehäuses hineinragt oder innerhalb dieser Bohrung am Schließzylinder in der Nut 14 mit einem rechtwinklig umgebogenen Ende einliegt.

Um eine Abzugsbewegung des Schließzylinders in eine rechtwinklig dazu gerichtete Bewegung des Drahtes im Bereich des Schloßgehäuseteils 1b umzusetzen, ist in dem Bereich, in dem das Teil 1b in das Gehäuseteil 1a mündet, der Draht in einer 45°-Richtung zu den Achsen des Schließzylinders und des Sperriegels gebogen, so daß während des Zugs der Draht an dieser inneren Gehäusestelle an der Innenwandung anliegt und dort entlangreibt. Eine solche Bewegung wird dadurch erleichtert, daß innerhalb des Schloßgehäuseteils, das den Sperriegel aufnimmt, zumindest nahe des gebogenen Bereichs der Draht einen Abstand zur Gehäusewandung hat.

## Patentansprüche

1. Zylinderschloß, insbesondere Lenkschloß für ein Kraftfahrzeug, mit einem durch einen Schließzylinder betätigbaren Sperriegel (4), der in seiner sperrenden Lage durch ein federbelastetes Sperrstück (10) sperrbar ist, wobei das Sperrstück (10) in seiner entsperrten Lage gegen den Druck der Feder (11) durch ein Teil gehalten wird, das bei unbefugter Entfernung des Schließzylinders aus dem Schloßgehäuse das Sperrstück (10) in die sperrende Lage freigibt, dadurch gekennzeichnet, daß das Teil ein zum Sperriegel (4) parallel angeordneter und längsbeweglicher Draht (9) ist, dessen äußeres Ende (9a) in den Weg des Sperrstücks (10) hineinragt und dessen inneres Ende (9b) zumindest in der Schlüsselabzugsstellung mit dem Schließzylinder (S) derart verbunden ist, daß eine Bewegung des Schließzylinders aus dem Schloßgehäuse (1) heraus zu einer Bewegung des Drahtes (9) in die das Sperrstück (10) freigebende Stellung führt.

2. Zylinderschloß nach Anspruch 1, dadurch gekennzeichnet, daß der Draht (9) mit dem Zylinderkern (2) oder der am Zylinderkern befestigten Schaltwalze (3) verbunden ist.

3. Zylinderschloß nach Anspruch 1 oder 2, dadurch gekennzeichnet, daß der Draht (9) über mindestens ein Zwischenteil (13) mit dem Schließzylinder (S) oder der Schaltwalze (3) verbunden ist.

4. Zylinderschloß nach einem der Ansprüche 1 bis 3, dadurch gekennzeichnet, daß der Draht (9) innerhalb des Schloßgehäuseteils (1b) einliegt, das den Sperriegel (4) aufnimmt.

5. Zylinderschloß nach einem der Ansprüche 1 bis 4, dadurch gekennzeichnet, daß der Draht (9) nahe des Schließzylinders (S) zur Schlüsseleinführungsseite hin umgebogen ist und in die den Schließzylinder aufnehmende Bohrung des Schloßgehäuses (1) hineinragt und innerhalb der Bohrung am Schließzylinder befestigt ist.

6. Zylinderschloß nach Anspruch 5, dadurch gekennzeichnet, daß mindestens ein Teil des gebogenen Bereichs des Drahtes (9) während des Zugs durch den Schließzylinder (S) an der Schloßgehäuseinnenwandung anliegt.

7. Zylinderschloß nach Anspruch 5 oder 6, dadurch gekennzeichnet, daß innerhalb des Schloßgehäuseteils (1b), das den Sperriegel (4) aufnimmt, zumindest nahe des gebogenen Bereichs der Draht (9) einen Abstand zur Gehäusewandung hat.

8. Zylinderschloß nach Anspruch 3 oder 4, dadurch gekennzeichnet, daß das Zwischenteil (13) eine zur Zylinderachse und Sperriegellängsachse schräge Fläche aufweist, an der das innere Drahtende (9b) anliegt.

9. Zylinderschloß nach Anspruch 8, dadurch gekennzeichnet, daß das innere Drahtende (9b) eine Öse (12) bildet, in der ein schräg zur Zylinderachse und zur Sperriegellängsachse angeordneter Bolzen (13a) hineinragt.

10. Zylinderschloß nach einem der Ansprüche 1 bis 9, dadurch gekennzeichnet, daß das innere Drahtende (9b) oder das Zwischenteil (13, 13b) in eine äußere Ringnut (14) am Schließzylinder (S) oder an der Schaltwalze (3) hineinragt.

11. Zylinderschloß nach Anspruch 10, dadurch gekennzeichnet, daß die Ringnut (14) zum Sperriegel (4) hin an einer Stelle unterbrochen ist, an der das innere Drahtende (9b) oder das Zwischenteil (13) in einer nur bei eingestecktem Schlüssel erreichbaren Stellung einliegt.

## Claims

1. Cylinder lock, especially steering lock for a motor vehicle, having a locking bolt (4) actuatable by a lock cylinder and lockable in its locking position by a spring-loaded locking piece (10), the locking piece (10) being held in its unlocked position against the pressure of a spring (11) by a part which releases the locking piece (10) into the locking position in the case of unauthorised removal of the lock cylinder from the lock housing, characterised in that the part is a longitudinally movable wire (9) arranged parallel to the locking bolt (4), the outer end (9a) of which wire protrudes into the path of the locking piece (10) and the inner end (9b) of which, at least in the key withdrawal position, is connected with the lock cylinder (S) in such a way that a movement of the lock cylinder out of the lock housing (1) leads to a movement of the wire (9) into the position liberating the locking piece (10).

2. Cylinder lock according to Claim 1, characterised in that the wire (9) is connected with the cylinder core (2) or the operating cam (3) secured to the cylinder core.

3. Cylinder lock according to Claim 1 or 2, characterised in that the wire (9) is connected through at least one intermediate part (13) with the lock cylinder (S) or the operating cam (3).

4. Cylinder lock according to one of Claims 1 to 3, characterised in that the wire (9) lies within the lock housing part (1b) which accommodates the locking bolt (4).

5. Cylinder lock according to one of Claims 1 to 4, characterised in that the wire (9) is bent over, close to the lock cylinder (S), towards the key insertion side and protrudes into the bore of the lock housing (1) which accommodates the lock cylinder, and is secured to the lock cylinder within the bore.

6. Cylinder lock according to Claim 5, characterised in that at least a part of the bent region of the wire (9) rests on the lock housing inner wall during pulling by the lock cylinder (S).

7. Cylinder lock according to Claim 5 or 6, characterised in that within the lock housing part (1b) which accommodates the locking bolt (4), at least close to the bent region, the wire (9) has a spacing from the housing wall.

8. Cylinder lock according to Claim 3 or 4, characterised in that the intermediate part (13) has a face oblique to the cylinder axis and the locking bolt longitudinal axis, against which the inner end (9b) of the wire rests.

9. Cylinder lock according to Claim 8, characterised in that the inner wire end (9b) forms an eye (12) into which there extends a bolt (13a) arranged obliquely of the cylinder axis and the locking bolt longitudinal axis.

10. Cylinder lock according to one of Claims 1 to 9, characterised in that the inner wire end (9b) or the intermediate part (13, 13b) protrudes into an outer annular groove (14) on the lock cylinder (S) or on the operating cam (3).

11. Cylinder lock according to Claim 10, characterised in that the annular groove (14) is interrupted towards the locking bolt (4) at a point where the inner wire end (9b) or the intermediate part (13) lies in a position reachable only when the key is inserted.

## Revendications

1. Verrou à barillet, en particulier verrou de direction pour un véhicule automobile, avec un pêne de verrouillage (4) pouvant être actionné par un cylindre de fermeture, qui peut être verrouillé dans sa position de verrouillage par un organe de verrouillage (10) rappelé par ressort, l'organe de verrouillage (10) étant maintenu en position déverrouillée contre la pression du ressort (11) par une pièce qui, lors d'un écartement non autorisé du barillet de fermeture en dehors du boîtier de verrou libère l'organe de verrouillage (10) en position de verrouillage, caractérisé par le fait que la pièce est un fil métallique (9) disposé parallèlement au pêne de verrouillage (4) et coulissant longitudinalement, dont l'extrémité extérieure (9a) fait saillie à l'intérieur du chemin de l'organe de verrouillage (10) et dont l'extrémité extérieure (9b) est reliée au moins en position d'extraction de la clé avec le barillet de fermeture (5) de telle manière qu'un déplacement du barillet de fermeture hors du boîtier de verrou (11) conduit à un déplacement du fil métallique (9) dans la position de libération de l'organe de verrouillage (10).

2. Verrou à barillet selon la revendication 1, caractérisé par le fait que le fil métallique (9) est relié au barillet (2) ou au commutateur à cames (3) fixé sur le barillet.

3. Verrou à barillet selon la revendication 1 ou 2, caractérisé par le fait que le fil métallique (9) est relié par au moins une pièce intermédiaire (13) au barillet de fermeture (5) ou au commutateur à cames (3).

4. Verrou à barillet selon l'une des revendications 1 à 3, caractérisé par le fait que le fil métallique (9) est logé à l'intérieur de la partie (1b) du boîtier de verrou qui reçoit le pêne de verrouillage (4).

5. Verrou à barillet selon l'une des revendications 1 à 4, caractérisé par le fait que le fil métallique (9) est recourbé vers la face d'entrée de clé au voisinage du barillet de fermeture (5) et fait saillie dans l'alésage du boîtier de verrou (1) qui reçoit le barillet de fermeture, et est fixé au barillet de fermeture à l'intérieur de l'alésage.

6. Verrou à barillet selon la revendication 5, caractérisé par le fait qu'au moins une partie de la zone recourbée du fil métallique (9) est adjacente à la paroi intérieure du boîtier de verrou pendant la traction par le barillet de fermeture (S).

7. Verrou à barillet selon l'une des revendications 5 et 6, caractérisé par le fait que, à l'intérieur de la partie (1b) du boîtier de verrou qui reçoit le pêne de verrouillage, le fil métallique (9) est écarté de la paroi du boîtier au moins au voisinage de la zone recourbée.

8. Verrou à barillet selon la revendication 3 ou 4, caractérisé par le fait que la pièce intermédiaire (13) présente une surface inclinée par rapport à l'axe du barillet et à l'axe longitudinal du pêne de verrouillage, à laquelle l'extrémité intérieure (9b) du fil métallique est adjacente.

9. Verrou à barillet selon la revendication 8, caractérisé par le fait que l'extrémité intérieure (9b) du fil métallique forme une boucle (12) dans laquelle fait saillie un axe (13a) disposé incliné par rapport à l'axe du barillet et à l'axe longitudinal du pêne de verrouillage.

10. Verrou à barillet selon l'une des revendications 1 à 9, caractérisé par le fait que l'extrémité intérieure (9b) du fil métallique ou la pièce intermédiaire (13, 13b) fait saillie dans une rainure annulaire extérieure (14) du barillet de fermeture (S) ou du commutateur à cames (3).

11. Verrou à barillet selon la revendication 10, caractérisé par le fait que la rainure annulaire (14) est interrompue en direction du pêne de verrouillage (4) dans un emplacement sur lequel est logée l'extrémité intérieure (9b) du fil métallique ou la pièce intermédiaire (13) dans une position qui ne peut être atteinte qu'avec la clé enfoncée.

Fig. 1

Fig. 2

Fig. 5

Fig. 4

Fig. 3

Fig. 6

Fig. 7

Fig. 10

Fig. 9

Fig. 8